# EUROPÄISCHE PATENTSCHRIFT

(11) **EP 3 183 549 B1**
(45) Veröffentlichungstag und Bekanntmachung des Hinweises auf die Patenterteilung: **19.09.2018**
(21) Anmeldenummer: 15739565.8
(22) Anmeldetag: 16.07.2015
(51) Int. Cl.: G01K 1/14, G01K 13/02, F16L 41/00

(54) **VERFAHREN ZUR HERSTELLUNG EINES MESSROHRS**
METHOD FOR PRODUCING A MEASUREMENT TUBE
PROCÉDÉ DE PRODUCTION D'UN TUBE DE MESURE

(30) Priorität: 21.08.2014 DE 102014111985
(43) Veröffentlichungstag der Anmeldung: 28.06.2017
(73) Patentinhaber: Endress+Hauser Wetzer GmbH+Co. KG, 87484 Nesselwang (DE)
(72) Erfinder: WIEDEMANN, Stephan, 87544 Bihlerdorf (DE)
(74) Vertreter: Andres, Angelika Maria
(86) Internationale Anmeldenummer: PCT/EP2015/066270
(87) Internationale Veröffentlichungsnummer: WO 2016/026621

(56) Entgegenhaltungen:
- EP-A2- 2 339 306
- DE-A1- 4 031 430
- DE-A1-102010 037 994
- US-A1- 2008 078 259

## Beschreibung

Die Erfindung bezieht sich auf ein Verfahren zur Herstellung eines Messrohrs, ein Messrohr erhalten durch das Verfahren und eine Messeinrichtung mit einem solchen Messrohr.

An Thermometer werden heutzutage für Anwendungen in der sterilen Verfahrenstechnik höchste Anforderungen gestellt. Dabei müssen die Messgeräte möglichst genau einen Messwert erfassen und gleichzeitig Anforderungen einer sterilen Produktion erfüllen. Die Einbindung des Sensors muss möglichst totraum- und spaltfrei erfolgen, um Ablagerungen bzw. einer Biofilmbildung keine Angriffsfläche zu bieten und eine rückstandsfreie Reinigung zu ermöglichen. Diese Problematik wird bspw. in dem Artikel "Totraumfreies Schutzrohr" abrufbar unter http://www.prozesstechnik-online.de/firmen/-/article/31534493/37267194/Totraumfreies-Schutzrohr/art co INSTANCE 0000/maximized/ geschildert. In der Offenlegungsschrift DE 102010037994 A1 wird eine Messstelle zur Messung einer physikalischen Größe bestehend aus einem Rohrabschnitt mit einer Öffnung, in der ein Adapter dichtend befestigt ist vorgeschlagen, der eine Messsonde aufnehmen kann, wobei der Rohrabschnitt eine Abplattung, durch die eine Abflachung, bzw. eine ebene Fläche entsteht, mit einer Öffnung aufweist, wobei der Adapter die Öffnung in dem abgeflachten Rohrabschnitt ausfüllt und der Adapter durch eine stoffliche Verbindung mit der abgeflachten Rohrwandung in der Ebene der Öffnung oder in einer Ebene parallel zur Abflachungsfläche verbunden ist.

Ferner ist aus der DE 102012112579 A1 eine Aufnahmevorrichtung für einen Messeinsatz, besonders bevorzugt zur Temperaturbestimmung, bekannt geworden, welche Aufnahmevorrichtung zur Aufnahme des Messeinsatzes dient, wobei die Aufnahmevorrichtung einen ersten Abschnitt und einen zweiten Abschnitt aufweist, die über einen Absatz voneinander getrennt sind, wobei der Absatz eine Form aufweist, die im Wesentlichen einem Ausschnitt aus der Mantelfläche einer rohrartigen Wandung eines Prozessbehälters, bspw. einer Rohrleitung oder eines Tanks, entspricht, in welche Wandung die Aufnahmevorrichtung einsetzbar ist Die US2008/0078259 A1 offenbart schließlich ein Messrohr, bei dem die Optimierung der hygienischen Bedingungen bezweckt wird.

Der Erfindung liegt die Aufgabe zugrunde eine Alternative zur Herstellung eines hygienegerechten Thermometers anzugeben, insbesondere ohne den Rohrabschnitt zu verformen bzw. dessen Querschnitt zu verändern.

Die Aufgabe wird erfindungsgemäß durch ein Verfahren nach Anspruch 1, ein Messrohr nach Anspruch 14 und eine Messeinrichtung nach Anspruch 16 gelöst.

Hinsichtlich des Verfahrens wird die Aufgabe durch ein Verfahren zur Herstellung eines Messrohrs, das zum Führen eines Messstoffs dient, welches Messrohr eine Rohrleitung mit einem Lumen umfasst, in welches Lumen ein Eintauchkörper ragt, wobei der Eintauchkörper mit einem Formstück verbunden wird, und wobei das Formstück derart mit der Rohrleitung verbunden wird, dass eine Ausnehmung in der Wandung der Rohrleitung durch das Formstück im Wesentlichen messstoffdicht verschlossen wird.

Bei dem Messrohr handelt es sich bspw. um einen Teil einer Rohrleitung oder einen Rohrleitungsabschnitt, in den ein Messaufnehmer integriert ist oder an den ein Messaufnehmer aufweist, um die chemische und/oder physikalische Messgröße eines Messstoffs zu bestimmen, der sich in der Rohrleitung befindet. Dabei ist ein Eintauchkörper bspw. in Form eines Schutzrohres vorgesehen, in welches Schutzrohr bspw. ein Messeinsatz, vorzugsweise zur Bestimmung der Temperatur, eingebracht werden kann. Bei dem Eintauchkörper kann es sich aber auch bspw. um ein Staurohr oder einen anderen Staukörper handeln, der in das Lumen des Rohres ragt. Die Rohrleitung kann dabei bspw. aus einem metallischen Werkstoff bestehen. Es sind jedoch auch Rohrleitungen, die aus Kunststoff bestehen, bekannt geworden.

Dieser Eintauchkörper wird nun an einer ersten Verbindungsstelle mit einem Formstück verbunden, welches Formstück den Eintauchkörper vorzugsweise vollumfänglich umgibt. Bei der Verbindung handelt es sich bspw. um eine stoffschlüssige zwischen dem Material des Eintauchkörpers an der ersten Verbindungsstelle und dem Material des Formstücks an der ersten Verbindungsstelle.

Der Eintauchkörper ist dabei im Wesentlichen zentriert bzw. mittig in dem Formstück angeordnet.

Anschließend kann das Formstück (samt dem nun damit starr verbundenen Eintauchkörper) mit der Rohrleitung an einer zweiten Verbindungsstelle verbunden werden. Dabei handelt es sich um eine stoffschlüssige Verbindung zw. dem Material des Formstücks an der zweiten Verbindungsstelle und dem Material der Rohrleitung an der zweiten Verbindungsstelle. Das Formstück ist dabei derartig geformt und mit der Rohrleitung verbunden, dass eine Ausnehmung, wie bspw. eine Öffnung, in der Wandung der Rohrleitung, durch welche Öffnung bspw. das Lumen mit der Umgebung der Rohrleitung verbunden ist, durch das Formstück vorzugsweise gas- und/oder flüssigkeitsdicht verschlossen wird.

Erfindungsgemäß dient ein Stück der Rohrwandung, insbesondere ein Rohrwandungsabschnitt, das aus der Rohrleitung herausgetrennt wird als Formstück. Das Formstück wird aus der Rohrleitung gewonnen, in die es später, nachdem der Eintauchkörper mit dem Formstück verbunden ist, wieder eingesetzt wird.

Das Formstück entspricht vorzugsweise einem Ausschnitt aus der Wandung der Rohrleitung. Die Ausnehmung in der Rohrleitung korrespondiert dann zu dem Formstück, dessen negativ sie bildet.

In einer weiteren Ausführungsform des Verfahrens wird die Ausnehmung durch Heraustrennen eines Stücks aus der Wandung der Rohrleitung gebildet. Dabei kann das Formstück durch einen oder mehrere Schnitte aus der Rohrleitung herausgetrennt werden. Bspw. kann durch einen ersten Schnitt, einen zweiten Schnitt, bspw. parallel zu dem ersten Schnitt, und einen dritten Schnitt, der den ersten und zweiten Schnitt miteinander verbindet, aus der Rohrleitung herausgetrennt werden. Der wenigstens eine Schnitt kann dabei durch Lasern, Bohren, Sägen, Stanzen oder Fräsen vorgenommen werden. Bei dem wenigstens einen Schnitt kann es sich um einen Aussparungsschnitt oder einen Formschnitt handeln. Dabei können der erste und zweite Schnitt entlang der Rohrachse versetzt voneinander beabstandet sein und bspw. senkrecht zu der Längsachse der Rohrleitung verlaufen. Der dritte Schnitt kann dann bspw. parallel zur Rohrachse, vorzugsweise durch die Rohrachse hindurch, verlaufen. Die Ausnehmung kann bspw. in einem fall aus einem, bspw. zentrischen oder exzentrischem, Loch, mit oder ohne Gehrung, in der Rohrleitung bestehen.

In einer weiteren Ausführungsform des Verfahrens ist die Ausnehmung, insbesondere fensterförmig oder endständig, in der Rohrleitung vorgesehen. Bei einem fensterförmigen Schnitt kann es sich bspw. um ein Loch in der Rohrleitung mit einer kreisförmigen, elliptischen oder vieleckigen Kontur auf der Außenseite oder der Innenseite der Rohrleitung handeln. Endständig bedeutet dabei, dass die Ausnehmung an einem Ende des Rohres angeordnet ist.

Bei der Rohrleitung kann es sich bspw. um einen Rundrohr, ein Quadratrohr, eine Rechteckrohr oder einen Rohrbogen handeln.

In einer weiteren Ausführungsform des Verfahrens wird der herausgetrennte Rohrwandungsabschnitt wieder mit der Rohrleitung verbunden.

In einer weiteren Ausführungsform des Verfahrens weist das Formstück, insbesondere der herausgetrennte Rohrwandungsabschnitt, einen im Wesentlichen bogenförmigen Querschnitt auf.

In einer weiteren Ausführungsform des Verfahrens wird in den Eintauchkörper ein Sensorelement eingebracht. Bspw. kann ein Messaufnehmer zu Bestimmung der Temperatur, vorzugsweise in Form eines Messeinsatzes an dessen Spitze der Messaufnehmer angeordnet ist, in den Eintauchkörper eingebracht werden.

In einer weiteren Ausführungsform des Verfahrens wird als Eintauchkörper ein rohrförmiges Schutzrohr, das zur Aufnahme eines Sensorelements dient, verwendet. Das Schutzrohr ist dabei vorzugsweise messstoffdicht ausgestaltet. Bei dem Messstoff ist bspw. gasförmig und/oder flüssig.

In einer weiteren Ausführungsform des Verfahrens wird der Eintauchkörper mit dem Formstück verschweißt. Bspw. kann das Formstück eine Innenseite, die im eingebauten Zustand dem Lumen der Rohrleitung zugewandt ist, und eine Außenseite, die im eingebauten Zustand der Umgebung der Rohrleitung zugewandt ist, aufweisen. Dabei ist von Vorteil, dass der Eintauchkörper von der Innenseite des Formstücks bearbeitet werden kann. Bspw. kann eine Schweißung von der Innenseite her vorgenommen werden, um den Eintauchkörper mit dem Formstück zu verbinden. Zudem kann eine Bearbeitung, bspw. Schweißung, auch von der Außenseite des Formstücks her vorgenommen werden, insbesondere um den Eintauchkörper mit dem Formstück zu verbinden.

In einer weiteren Ausführungsform des Verfahrens wird eine Schweißnaht zwischen dem Eintauchkörper und dem Formstück geglättet oder anderweitig bearbeitet, bevor das Formstück mit der Rohrleitung verbunden wird.

In einer weiteren Ausführungsform des Verfahrens wird der Eintauchkörper derart mit dem Formstück verbunden, vorzugsweise verschweißt, dass ein den Hygienebestimmungen genügender Radius zwischen dem Eintauchkörper und dem Formstück gebildet wird. Den Hygienebestimmungen entspricht bspw. eine Oberflächenbeschaffenheit mit einer mittleren Rauheit von Ra < 0,38µm.

In einer weiteren Ausführungsform des Verfahrens wird die gebildete Verbindung zwischen Eintauchkörper und dem Formstück derart bearbeitet, vorzugsweise poliert und/oder geschliffen, dass eine den Hygienebestimmungen genügende Oberflächenbeschaffenheit zwischen dem Eintauchkörper und dem Formstück erzeugt wird.

In einer weiteren Ausführungsform des Verfahrens wird das Formstück vermittels eines Laser- oder Plasma-Schneideverfahrens aus der Rohrwandung getrennt.

In einer weiteren Ausführungsform des Verfahrens wird das Formstück vermittels eines Schweißverfahrens mit der Rohrleitung verbunden.

In einer weiteren Ausführungsform des Verfahrens wird eine an das Lumen des Messrohrs grenzende Schweißnaht zwischen dem Formstück und der Rohrleitung, bspw. durch Abschleifen und/oder Polieren der Schweißnaht, geglättet. Die Schweißnaht kann sich bspw. an der Innenseite des Formstücks befinden.

Das Formstück kann bevorzugt die gleiche Wandstärke aufweisen wie die Wandung der Rohrleitung. Das Formstück wird dabei bevorzugt fluchtend mit der inneren Wandung, d.h. bündig, der Rohrleitung angeordnet.

Hinsichtlich des Messrohrs wird die Aufgabe durch ein Messrohr erhalten durch das Verfahren nach einem der vorherigen Ausführungsformen gelöst.

In einer Ausführungsform des Messrohrs handelt es sich bei der Rohrleitung um ein T-Stück oder ein Eckstück.

Hinsichtlich der Messeinrichtung wird die Aufgabe durch eine Messeinrichtung mit einem Messrohr nach einer der Ausführungsformend des Messrohrs gelöst, wobei der Eintauchkörper einen Messaufnehmer zur Bestimmung der Temperatur umfasst. Die Messeinrichtung kann somit zur Bestimmung der Absoluttemperatur verwendet werden. Ferner ist es auch möglich die Messeinrichtung zur Bestimmung eines Durchflusses durch das Messrohr, bspw. beruhend auf dem kalorimetrischen Messprinzip oder dem Vortex-Messprinzip, zu verwenden.

Ferner können auch mehrere Eintauchkörper in das Formstück eingebracht und anschließend das Formstück mit der Rohrleitung verbunden werden. Bspw. kann ein Eintauchkörper zur Erzeugung von Wirbeln in dem Messstoff dienen, während ein anderer Eintauchkörper zur Erfassung dieser Wirbel dient. Andererseits kann in einem ersten Eintauchkörper ein Heizelement sitzen und in einem anderen, davon beabstandeten, Eintauchkörper ein Temperatursensor zu Erfassung der Temperatur in dem Messstoff.

Die Erfindung wird anhand der nachfolgenden Zeichnungen näher erläutert. Es zeigt:
Fig. 1: eine schematische Darstellung einer Ausführungsform eines Messrohrs mit einer Rohrleitung, einem Formstück und einem Eintauchkörper, und
Fig. 2: eine Explosionsdarstellung einer weiteren Ausführungsform eines Messrohrs mit einer Rohrleitung, einem Formstück, einem Eintauchkörper und einem Halsrohr.

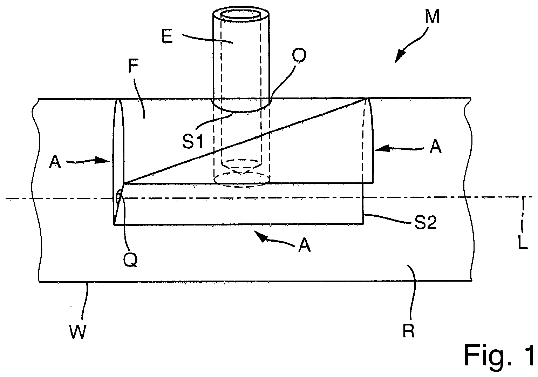

Figur 1 zeigt eine Ausführungsform eines Messrohrs M, das eine Rohrleitung R umfasst, die zum Führen eines bspw. strömenden Messstoffs dient. In eine Ausnehmung A in der Rohrleitung R ist ein zur Ausnehmung korrespondierendes Formstück F eingesetzt, durch welches Formstück F die Ausnehmung A verschlossen wird. Mittig in dem Formstück F ist ein Eintauchkörper E in einer Öffnung O in der Rohrleitung R angeordnet. Der Eintauchkörper E ist ebenfalls in Form eine Rohres ausgebildet, das einen Boden aufweist, der in das Lumen der Rohrleitung R ragt.

Der Eintauchkörper E dient vorliegend zur Aufnahme eines Messeinsatzes, nicht gezeigt, der in den Eintauchkörper E eingebracht werden kann. Derartige (quasi) standardisierte Messeinsätze sind bspw. zur Temperaturmessung bekannt.

Das Messrohr M weist eine erste, bspw. geschweißte, Verbindung S2 zwischen dem Formstück F und der Rohrleitung R auf. Ferner weist das Messrohr M eine zweite, bspw. geschweißte Verbindung, zwischen dem Formstück F und dem Eintauchkörper E auf.

Das Messrohr M wird wie im Folgenden beschrieben hergestellt. Aus einer Rohrleitung R, wie bspw. einem Rundrohr, wird ein Formstück F ausgeschnitten, so dass eine Öffnung O in der Rohrleitung R gebildet wird, die das Lumen der Rohrleitung R mit der Umgebung der Rohrleitung R verbindet. Das Formstück F bzw. die Ausnehmung A weist dabei bevorzugt im Querschnitt zur Längsachse L, die als Polarachse dient, einen Polarwinkel Θ von mehr als 45° auf. Bevorzugt beträgt der durch die Ausnehmung bzw. durch das Formteil vorgegebene Polarwinkel Θ im Wesentlichen 180°.

Durch die vorgeschlagene Verbindung zw. dem Eintauchkörper und dem Formstück bzw. dem Formstück und der Rohrleitung R kann eine hygienegerechte Schweißung der Bauteile ermöglicht werden. Die entsprechenden Vorschriften verbieten einen scharfkantigen Übergang zwischen den Bauteilen, da so die Gefahr von Materialanhaftungen besteht. Vielmehr muss Bestimmungsgemäß ein Radius bzw. bestimmter Winkel und/oder eine bestimmte Oberflächengüte gegeben sein, vgl. bspw. die Offenlegungsschrift DE 102012112579 A1.

Vorliegend kann bspw. mit Hilfe einer 3D-Schneidemaschine, bspw. vermittels eines Laser- oder Plasma-Schneidverfahrens ein Formstück F aus der Rohrleitung R herausgetrennt werden. In dieses Formstück F kann der Eintauchkörper in Form eines Rohrwandungsabschnitts R eingeschweißt werden. Da das Formstück F, wenn es herausgetrennt ist, von beiden Seiten zugänglich ist, kann so die Schweißnaht S1 normgerecht bearbeitet werden. Dabei kann bspw. der Radiusübergang zwischen dem Eintauchkörper und dem Formstück poliert werden.

Anschließend wird das Formstück F wieder in die Rohrleitung R eingeschweißt. Diese Schweißnähte S2 können nun auch von innen nachbearbeitet werden, da der Eintauchkörper die Bearbeitung nicht behindert bzw. nicht mehr bearbeitet werden muss. Mit geeigneten Werkzeugen kann so die Schweißnaht S2 geschliffen und/oder poliert werden.

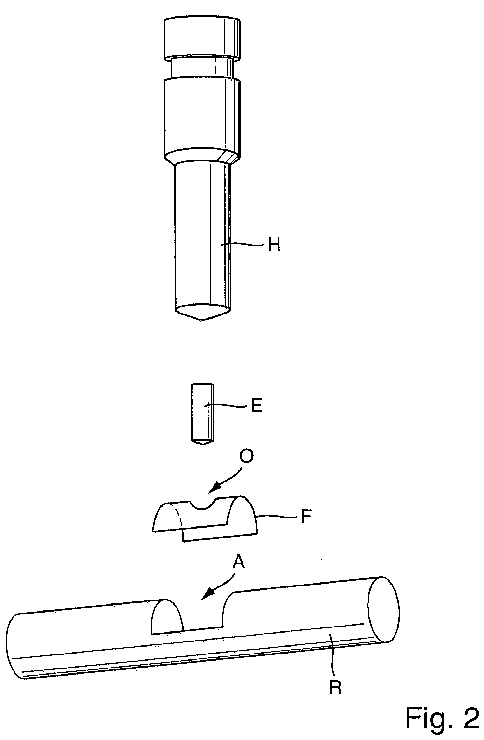

In Figur 2 ist eine Ausführungsform der vorgeschlagenen Erfindung in einer Explosionsdarstellung dargestellt. In eine Ausnehmung A der Rohrleitung wird ein Formstück F, in das bereits ein bspw. rohrförmiger Eintauchkörper E eingesetzt ist, mit der Rohrleitung R verbunden. Der Eintauchkörper wird dabei zunächst in eine Öffnung O des Formstücks F eingebracht und mit dem Formstück verbunden.

Der Eintauchkörper E ist bspw. rohrförmig ausgestaltet und weist ein geschlossenes Ende auf, das dazu dient in das Lumen der Rohrleitung zu ragen. Ferner weist der Eintauchkörper E ein dem geschlossenen ende gegenüberliegendes offenes Ende auf in das ein Sensorelement eingesetzt werden kann.

Der Eintauchkörper E wird dabei entweder derart in die Öffnung eingebracht, dass der Rand des offenen Endes des Eintauchkörpers bündig zu der Oberfläche des Formstücks angeordnet ist. Alternativ kann der Eintauchkörper E, wie in Figur 1 gezeigt, beidseitig aus dem Formstück F herausragen. Vorzugsweise ragt der Eintauchkörper E im eingebauten Zustand nicht mehr als die Hälfte des Rohdurchmessers der Rohrleitung R in das Lumen der Rohrleitung R hinein.

Aus einem Rundrohr, das gerade oder gebogen verläuft, und als Rohrleitung R dient, kann ein Teil der Wandung, das als Formstück dient, herausgetrennt werden. In dieses Formstück kann dann ein als Öffnung O dienendes Loch gebohrt werden und der Eintauchkörper in dieses Loch eingesetzt werden. Anschließend kann der Eintauchkörper E mit dem Formstück F verschweißt werden. Diese Schweißnaht kann sodann von beiden Seiten des Formstücks, d.h. der im eingebauten Zustand dem Lumen der Rohleitung zugewandten Seite und der im eingebauten Zustand der Umgebung der Rohrleitung zugewandten Seite bearbeitet werden. Dabei kann bspw. eine gewünschte Rauigkeit des Formstücks und des Eintauchkörpers erzeugt werden und/oder ein gewünschter Radius der Schweißverbindung erzeugt werden. Anschließend kann das Formstück wieder an die Rohrleitung geschweißt werden. Auch diese Schweißnaht kann dann nachträglich bearbeitet werden, da der angeschweißte Eintauchkörper die Bearbeitung nicht behindert.

Ferner kann ein sog. Halsrohr H vorgesehen sein, das ebenfalls mit der Rohrleitung R verbunden wird und welches Halsrohr H derart angeordnet ist, dass der Eintauchkörper E auf der der Umgebung zugewandten Seite der Rohrleitung R innerhalb des Halsrohr H angeordnet ist. Das Halsrohr kann bspw. dazu dienen Anschlussleitungen für das Sensorelement oder eine messsignalverarbeitende Elektronik aufzunehmen

Die vorgeschlagene Erfindung bietet somit den Vorteil, dass ein totraumfreies Messrohr geschaffen wird, das ohne eine Querschnittsveränderung der Rohrleitung auskommt. Ferner können die Schweißnähte in einfacher Weise bearbeitet werden, um den Anforderungen hinsichtlich der Verwendung in Analgen, die Hygienevorschriften genügen müssen, zu gewährleisten.

## Patentansprüche

1. Verfahren zur Herstellung eines Messrohrs (M), das zum Führen eines Messstoffs dient, welches Messrohr (M) eine Rohrleitung (R) mit einem Lumen umfasst, in welches Lumen ein Eintauchkörper (E) ragt,
wobei der Eintauchkörper (E) mit einem Formstück (F) verbunden wird, und
wobei das Formstück (F) derart mit der Rohrleitung (R) verbunden wird, dass eine Ausnehmung (A) in der Wandung der Rohrleitung (R) durch das Formstück (F) im Wesentlichen messstoffdicht, bspw. gasdicht und/oder flüssigkeitsdicht, verschlossen wird,
**dadurch gekennzeichnet, dass**
ein Stück der Rohrwandung (W), insbesondere ein Rohrwandungsabschnitt, aus der Rohrleitung (R) herausgetrennt wird und als Formstück (F) dient.

2. Verfahren nach einem der vorherigen Ansprüche,
wobei die Ausnehmung (A) durch Heraustrennen eines Stücks aus der Wandung (W) der Rohrleitung (R) gebildet wird.

3. Verfahren nach einem der vorherigen Ansprüche,
wobei die Ausnehmung (A), insbesondere fensterförmig oder endständig, in der Rohrleitung (R) vorgesehen ist.

4. Verfahren nach einem der vorherigen Ansprüche,
dass der herausgetrennte Rohrwandungsabschnitt wieder mit der Rohrleitung (R) verbunden wird.

5. Verfahren nach einem der vorherigen Ansprüche,
wobei das Formstück (F), insbesondere der herausgetrennte Rohrwandungsabschnitt, einen im Wesentlichen bogenförmigen Querschnitt aufweist.

6. Verfahren nach einem der vorherigen Ansprüche,
wobei in den Eintauchkörper (E) ein Sensorelement eingebracht wird.

7. Verfahren nach einem der vorherigen Ansprüche,
wobei als Eintauchkörper (E) ein rohrförmiges Schutzrohr, das zur Aufnahme eines Sensorelements dient, verwendet wird.

8. Verfahren nach einem der vorherigen Ansprüche,
wobei der Eintauchkörper (E) mit dem Formstück (F) verschweißt wird.

9. Verfahren nach einem der vorherigen Ansprüche,
dass eine Schweißnaht (S1) zwischen dem Eintauchkörper (E) und dem Formstück (F) geglättet wird, bevor das Formstück (F) mit der Rohrleitung (R) verbunden wird.

10. Verfahren nach einem der vorherigen Ansprüche,
wobei der Eintauchkörper (E) derart mit dem Formstück (F) verbunden, vorzugsweise verschweißt, wird, dass ein den Hygienebestimmungen genügender Radius zwischen dem Eintauchkörper (E) und dem Formstück (F) gebildet wird.

11. Verfahren nach einem der vorherigen Ansprüche,
wobei das Formstück (F) vermittels eines Laser- oder Plasma-Schneideverfahrens aus der Rohrwandung (W) getrennt wird.

12. Verfahren nach einem der vorherigen Ansprüche,
wobei das Formstück (F) vermittels eines Schweißverfahrens mit der Rohrleitung (R) verbunden wird.

13. Verfahren nach einem der vorherigen Ansprüche,
wobei eine an das Lumen des Messrohrs (M) grenzende Schweißnaht (S2) zwischen dem Formstück (F) und der Rohrleitung (R), bspw. durch Abschleifen und/oder Polieren der Schweißnaht (S2), geglättet wird.

14. Messrohr (M) erhalten durch das Verfahren nach einem der vorherigen Ansprüche.

15. Messrohr (M) nach dem vorherigen Anspruch,
wobei es sich bei der Rohrleitung (R) um ein T-Stück oder ein Eckstück handelt.

16. Messeinrichtung mit einem Messrohr (M) nach Anspruch 15 oder 16,
wobei der Eintauchkörper (E) einen Messaufnehmer zur Bestimmung der Temperatur umfasst.

## Claims

1. Procedure for the fabrication of a measuring tube (M), which serves to conduct a medium, said measuring tube (M) comprising a pipe (R) with an interior channel,
wherein an immersion body (E) projects into said interior channel,
wherein the immersion body (E) is connected to a molded piece (F), and
wherein the molded piece (F) is connected to the pipe (R) in such a way that a recess (A) in the wall of the pipe (R) is sealed by the molded piece (F) essentially in a manner that is medium-tight, such as gas-tight and/or liquid-tight,
**characterized in that**
a part of the pipe wall (W), particularly a pipe wall section, is removed from the pipe (R) and serves as a molded piece (F).

2. Procedure as claimed in one of the previous claims,
wherein the recess (A) is formed by removing a piece from the wall (W) of the pipe (R).

3. Procedure as claimed in one of the previous claims,
wherein the recess (A), notably in the form of a window or terminal, is provided in the pipe (R).

4. Procedure as claimed in one of the previous claims,
wherein the removed pipe wall section is connected again to the pipe (R).

5. Procedure as claimed in one of the previous claims,
wherein the molded piece (F), particularly the removed pipe wall section, has an essentially arc-shaped cross-section.

6. Procedure as claimed in one of the previous claims,
wherein a sensor element (E) is introduced into the immersion body (E).

7. Procedure as claimed in one of the previous claims,
wherein a tubular protective pipe, which is used to support a sensor element, serves as the immersion body (E).

8. Procedure as claimed in one of the previous claims,
wherein the immersion body (E) is welded to the molded piece (F).

9. Procedure as claimed in one of the previous claims,
wherein a welded seam (S1) between the immersion body (E) and the molded piece (F) is smoothened before the molded piece (F) is connected to the pipe (R).

10. Procedure as claimed in one of the previous claims,
wherein the immersion body (E) is connected to the molded piece (F), preferably welded, in such a way that a radius that complies with hygiene regulations is formed between the immersion body (E) and the molded piece (F).

11. Procedure as claimed in one of the previous claims,
wherein the molded piece (F) is removed from pipe wall (W) using a laser or plasma cutting method.

12. Procedure as claimed in one of the previous claims,
wherein the molded piece (F) is connected to the pipe (R) using a welding technique.

13. Procedure as claimed in one of the previous claims,
wherein a welded seam (S2) adjacent to the interior channel of the measuring tube (M) is smoothened between the welded piece (F) and the pipe (R) for example by grinding and/or polishing the welded seam (S2).

14. Measuring tube (M) obtained using the procedure as claimed in one of the previous claims.

15. Measuring tube (M) as claimed in the previous claim,
wherein the pipe (R) is a T-piece or corner piece.

16. Measuring unit with a measuring tube (M) as claimed in Claim 15 or 16, wherein the immersion body (E) comprises a sensor for determining the temperature.

## Revendications

1. Procédé destiné à la fabrication d'un tube de mesure (M), qui sert au guidage d'un produit, lequel tube de mesure (M) comprend une conduite (R) avec un canal intérieur, canal intérieur dans lequel pénètre un corps submersible (E),
pour lequel le corps submersible (E) est relié avec une pièce façonnée (F), et pour lequel la pièce façonnée (F) est reliée avec la conduite (R) de telle sorte qu'un évidement (A) dans la paroi de la conduite (R) est obturé par la pièce façonnée (F), pour l'essentiel de façon étanche au produit, par exemple de façon étanche aux gaz et aux liquides,
**caractérisé**
**en ce qu'**une pièce de la paroi de tube (W), notamment une partie de la paroi de tube, est découpée dans la conduite (R) et sert de pièce façonnée (F).

2. Procédé selon la revendication précédente,
pour lequel l'évidement (A) est formé par la découpe d'une pièce dans la paroi (W) de la conduite (R).

3. Procédé selon l'une des revendications précédentes,
pour lequel l'évidement (A), notamment en forme de fenêtre ou terminal, est prévu dans la conduite (R).

4. Procédé selon l'une des revendications précédentes,
pour lequel la partie découpée dans la paroi de tube est de nouveau reliée avec la conduite (R).

5. Procédé selon l'une des revendications précédentes,
pour lequel la pièce façonnée (F), notamment la partie découpée dans la paroi de tube, présente une section pour l'essentiel en forme d'arc.

6. Procédé selon l'une des revendications précédentes,
pour lequel un élément capteur est introduit dans le corps submersible (E).

7. Procédé selon l'une des revendications précédentes,
pour lequel le corps submersible (E) est utilisé en tant que tube de protection, qui sert de support pour un élément capteur.

8. Procédé selon l'une des revendications précédentes,
pour lequel le corps submersible (E) est soudé avec la pièce façonnée (F).

9. Procédé selon l'une des revendications précédentes,
pour lequel un cordon de soudure (S1) est lissé entre le corps submersible (E) et la pièce façonnée (F), avant que la pièce façonnée (F) ne soit reliée avec la conduite (R).

10. Procédé selon l'une des revendications précédentes,
pour lequel le corps submersible (E) est relié avec la pièce façonnée (F), de préférence soudée, de telle sorte à former un rayon conforme aux règles d'hygiène entre le corps submersible (E) et la pièce façonnée (F).

11. Procédé selon l'une des revendications précédentes,
pour lequel la pièce façonnée (F) est découpée dans la paroi de tube (W) au moyen d'un procédé de découpe au laser ou au plasma.

12. Procédé selon l'une des revendications précédentes,
pour lequel la pièce façonnée (F) est reliée avec la conduite (R) au moyen d'un procédé de soudage.

13. Procédé selon l'une des revendications précédentes,
pour lequel un cordon de soudure (S2), jouxtant le canal intérieur du tube de mesure (M), est lissé, par exemple par meulage et/ou polissage du cordon de soudure (S2), entre la pièce façonnée (F) et la conduite (R).

14. Tube de mesure (M) obtenu par le procédé selon l'une des revendications précédentes.

15. Tube de mesure (M) selon la revendication précédente,
pour lequel il s'agit, concernant la conduite (R), d'une pièce en T ou d'une pièce de coin.

16. Dispositif de mesure avec un tube de mesure (M) selon la revendication 15 ou 16,
pour lequel le corps submersible (E) comprend un capteur destiné à la détermination de la température.
